# EUROPÄISCHE PATENTSCHRIFT

(11) **EP 2 020 307 B1**
(45) Veröffentlichungstag und Bekanntmachung des Hinweises auf die Patenterteilung: **08.02.2012**
(21) Anmeldenummer: 08466015.8
(22) Anmeldetag: 23.07.2008
(51) Int. Cl.: B60B 7/04

(54) **Grossflaechiger Deckel eines Rads mit eingesetzen Elementen**
Wide-area cover of a wheel with inlaid elements
Couvercle à grande surface d'une roue dotée d'éléments insérés

(30) Priorität: 25.07.2007 CZ 20070499
(43) Veröffentlichungstag der Anmeldung: 04.02.2009
(73) Patentinhaber: Skoda Auto A.S., 293 60 Mladá Boleslav (CZ)
(72) Erfinder: Hrdlicka, Martin, 29301 Mlada Boleslav (CZ); Jaskmanicki, Miroslav, 29446 Semcice (CZ)

(56) Entgegenhaltungen:
- EP-A2- 1 584 491
- GB-A- 2 259 891
- JP-A- 2004 148 908
- US-A1- 2006 066 145

## Beschreibung

### Technisches Gebiet

Die Erfindung gehört zur Kategorie der mehrteiligen Konstruktionen großflächiger Deckel eines Rads, verwendet in der Verbindung mit deren gepressten Stahlblechausführungen, vor allem dann im Einbau bei Kraftfahrzeugen, wo ein solches Konstruktionsteil eine Reihe von Funktionen erfüllt.

### Bisheriger Stand der Technik

Die Räder von Kraftfahrzeugen spielen neben der Bereitstellung ihrer Funktionseigenschaften auch eine unvertretbare ästhetische Rolle im Rahmen des gesamten Automobilausdrucks. Es wird sogar eine qualifizierte Schätzung angeführt, dass diese so bedeutend sind, dass diese 30% des Gesamtbewertungseindrucks am Fahrzeug ausmachen. Deshalb ist es logisch, dass die Designer und Automobilhersteller dem Design der Fahrzeugräder hinsichtlich der Betrachtungsansicht eine außerordentliche Aufmerksamkeit widmen, denn deren Modifikation ist ein relativ praktikabler Weg hinsichtlich einer Auffrischung des gesamtheitlichen Aussehens eines solchen Produkts und dadurch auch zur rentablen Aufrechterhaltung von dessen Modellpflege über einen tragbaren Zeitraum.

Wird die Sondergruppe der Fahrzeugräder ausgelassen, die aus Leichtmetall gegossen werden, wo in der Regel ein strahlenförmiges oder speichenartiges Design mit den Festigkeitsanforderungen gelöst werden, dann bleibt die klassische Methode der Abdeckung einer relativ ausdruckslosen, oder auch bis störenden blanken Radfelge von außen durch einen leicht entnehmbaren, großflächigen Kunststoffdeckel stehen. Das begleitende Problem hierbei ist jedoch die Abschirmung des ausstrahlenden Wärmebestandteils, übergeben aus der Radbremsanlage während der Verhinderung von Bewegungsenergie in Richtung außerhalb des Fahrzeugs. Deshalb dient der Korrektur dieses Nachteils ein besonderes hochentwickeltes und vor allem ästhetisch zielendes System von Belüftungsöffnungen des großflächigen Deckels, das die Wärmeableitung aus dem Radnabenbereich durch Luftströmung verstärkt.

Gegenwärtig werden eine Reihe dieser Lösungen verzeichnet, überwiegend einteilig, wenn das separate, aufgeklebte Emblem, das Befestigungsfedersystem und gegebenenfalls die kleine zentrale, abnehmbare Abdeckung der Radschrauben nicht eingerechnet wird. Der wichtige und Individuelle Ausdruck der einzelnen großflächigen Raddeckel reduziert jedoch parallel proportional die Ausnutzbarkeit bekannter technologischer Vorgehensweisen der Kunststoffverarbeitung und der Möglichkeiten der farblichen Anpassungen und Varianten der so angewendeten Materialien. Deshalb erschienen in der Praxis logischerweise auch ästhetisch reichhaltigere und interessantere, mehrteilige Ausführungen solcher großflächiger Raddeckel. Die ergänzenden Elemente sind dann auf deren Grundkörper auf der rechten Ansichtsseite angebracht.

Andere bekannte Ausführungen, Lösungen in ähnlichem Sinn sind zu dem dadurch gekennzeichnet, dass diese ziemlich einseitig die Funktionalität der äußeren ästhetischen Wirkung unterstellen.

Aus der gattungsbildenden GB2259891 ist ein Körper bekannt, der in Jeder aus einer Vielzahl von Durchgangsbohrungen in der Radscheibe mit Schrauben oder anderen lösbaren Befestigungsmittel ausgestattet ist. Die Körper können getrennt oder durch Vorsprünge auf einer kreisförmigen Platte an der Rückseite der Radscheibe gebildet werden. In diesem Dokument stellt eine Zierde für as Automobil-Rad, bestehend aus einen Körper in Form eines kurzen Zylinders bestückbar in jeder aus einer Vielzahl von durch-Löcher in der Scheibe des Rades gebildet geformt, des Körpers angepasst, um entfernbar in die Durchgangsbohrung mit Schrauben oder dergleichen befestigt zu werden. Weiter umfasst das Ornament für das Automobil-Rad einen Körper mit einer umlaufenden Wand, die eine Form der Montage der Durchgangsbohrung in der Radscheibe und der hat einen nach außen abstehenden Flansch einstückig damit am oberen Rand versehen.

### Darstellung der Erfindung

Die aufgeführten Unzulänglichkeiten der oben angeführten bekannten Ausführungen und beide scheinbar kontroversen Anforderungen der Aufgabe werden zu einem wesentlichen Maß gegenseitig mittels der Konstruktionsausführung des großflächigen Deckels des Rads mit eingesetzten Teilen laut der Erfindung aneinander angenähert.

Es geht dabei um die Lösung, wo in den Grundkörper des Deckels, welcher die obligatorischen zur Zentrierung am Fahrzeugrad bestimmten Elemente beinhaltet, im Bereich der zugehörig erweiterten Lüftungsöffnungen feste und von der Rückseite eingesetzte Einlagen von anderer Farbe, Struktur oder Material sich befinden, die eine Form von Rahmen mit eigenen speziellen Öffnungen, konstruiert aus der Sicht einer Strömungsoptimierung der Kühlungsluft, besitzen. Dieses wird durch die Separation der Fertigungsvorgehensweisen des Grundkörpers und der eingelegten Einlagen ermöglicht, konkret Unabhängigkeit der Abformwinkel, ggf. durch vollständig unterschiedliche Technologiearten.

### Vorteile der Lösung laut der Erfindung.

Die Konstruktion des großflächigen Deckels des Rads mit eingelegten Elementen laut der Erfindung verfügt gegenüber den eigenen Konkurrenten der vergleichbaren Kategorie über eine Reihe von Vorzügen. Dieses ist vor allem die große ästhetische Variabilität der Ausführung, beispielsweise die Möglichkeit der Ausführung der eingelegten Rahmen in Fahrzeugfarbe, oder deren direkte metallische Ausführung in verschiedenen Anpassungen, weiter dann die Präzision der Verbindung und Reinheit der Fugen an den Schnittstellen des Grundkörpers und der eingelegten Elemente. Dieses alles dann in der Kombination mit der Möglichkeit des Entwurfs einer speziellen Form der separaten Belüftungsöffnungen, welche mit dem Fahrzeugrad als rotierende Kanäle eines radial-axialen Ventilators wirken. Hier ist sogar deren Optimierung mittels einer schraubenförmigen Neigung der Kanalmitte so möglich, dass auf der einen Seite die Aufnahme der Warmluft aus dem Radinnenbereich verstärkt wird aber auf der anderen Seite dieses den Luftwiderstand des Gesamtfahrzeugs nicht negativ beeinflusst.

### Übersicht der Figuren der Zeichnungen

Die Erfindung wird näher mittels der hinzugefügten Darstellungen erläutert, wo die Fig.1 die Draufsicht auf die Rechtsseite der Radzierabdeckung darstellt, die Fig. 2 stellt die axonometrische Ansicht auf die Innere Seite des gesamten Radzierdeckels dar, die Fig. 3 stellt eine detaillierte axonometrische Ansicht der Innenseite des Radzierdeckels auf den Grundkörper mit den montierten eingelegten Elementen dar.

### Ausführungsbeispiel der Erfindung

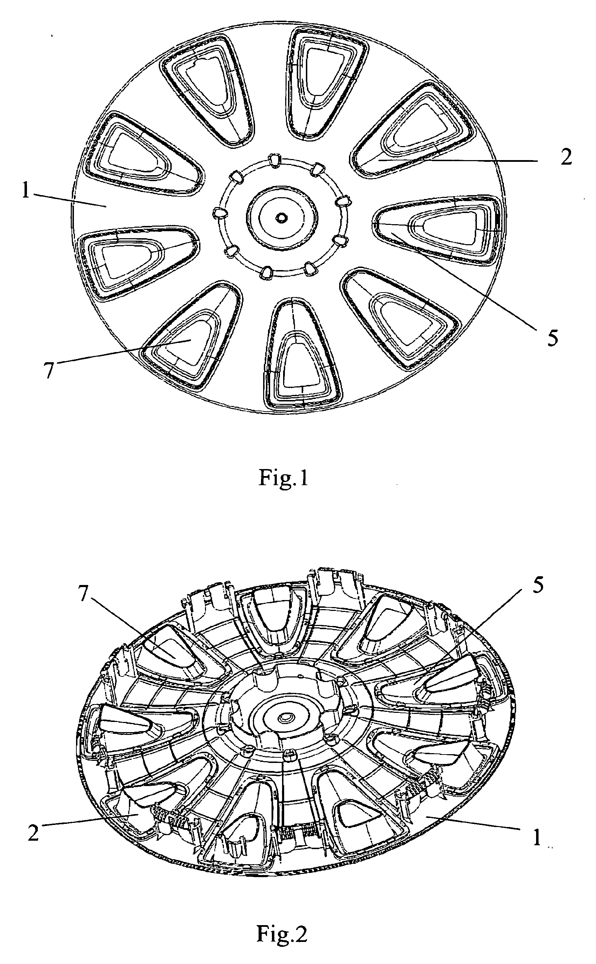

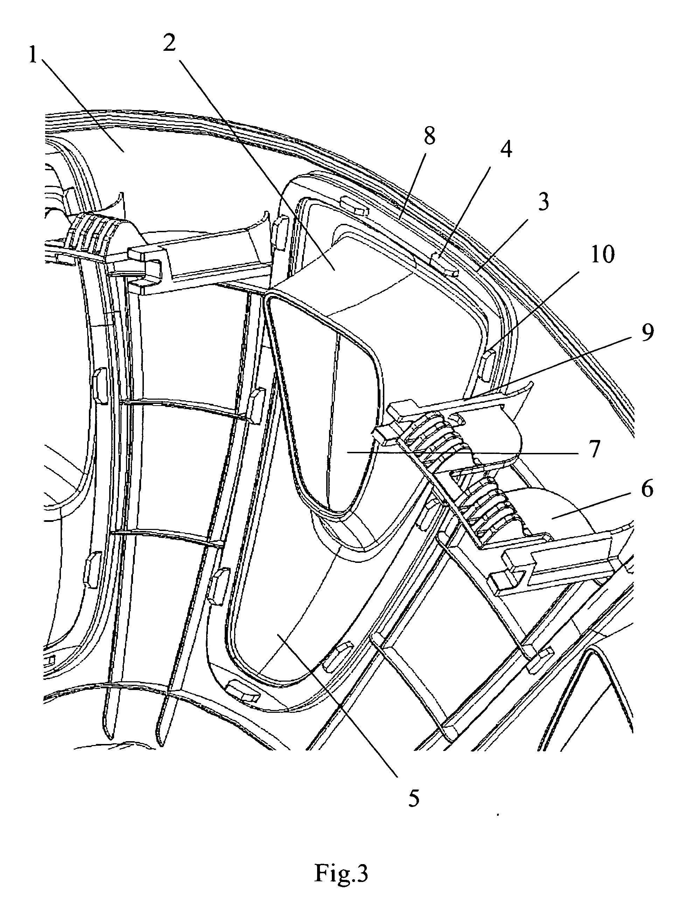

Das Beispiel einer möglichen, konkreten Konstruktionsausführung laut der Erfindung ist in den Fig. 1, Fig. 2 und Fig. 3 aufgeführt.

Hier befindet sich der Grundkörper 1 des zusammengesetzten Deckels für das Rad, versehen mit den gängigen Fixierungskonsolen 6 mit den Trägern 9 der nicht eingezeichneten, unterstützenden Umfangsfedern versehen mit den Montageöffnungen 5 und an deren Umfang der Innenseiten, das ist die nicht sichtbare Seite mit einem engen Auflageflansch 3, aus dem nahezu senkrecht, jedoch in einer einzigen Richtung zum Innenbereich hin, einige Montageelemente 4 abstehen.

Auf diese Montagelemente 4 werden mittels der durchgängigen Montageöffnungen 10 von der Innenseite des Grundkörpers 1 die Einsatzelemente 2 in der Form eines Rahmens mit einem äußeren Flansch 8 so aufgesetzt, dass diese auf dem Anschlussflansch 3 des Grundkörpers 1 bündig aufliegen, Die nicht demontierbare Verbindung der Einsatzelemente 1 und 2 wird durch die gegenseitige Verschweißung per Ultraschall an den Stellen der Montageelemente 4 sichergestellt. Daraus folgt, dass das Material der eingelegten Einsatzelemente 2 eine solche Verschweißbarkeit nicht vorweisen muss und zum Beispiel aus Metall sein kann. Für eine Sonderbetrachtung steht auch die Form und Funktion der Belüftungskanäle 7, gebildet durch die eingelegten Einsatzelemente 2, die hier als aerodynamische Elemente der radial-axialen Rotationsmaschine die Möglichkeit einer speziellen Formung und Ausrichtung besitzen. Eine solche optimierte Ausführung bedeutet dann eine Ausführung für die linke und rechte Seite separat, was eine Ausführung darstellt, die woanders in der gegebenen Kombination unmöglich ist.

### Gewerbliche Anwendbarkeit

Die Konstruktion laut der Erfindung ist vor allem für den Bau und die Massenproduktion von Kraftfahrzeugen, weiter für Elektromobile, ggf. für leichte Nutzfahrzeuge bestimmt.

### Verwendete Kennzeichnungen

- 1: Grundkörper des großflächigen Deckels eines Rads
- 2: Eingesetztes Element
- 3: Umfangsauflageflansch der Montageelemente **5**, ausgebildet auf der Innenseite des Grundkörpers **1**
- 4: Montageelemente des Grundkörpers **1**, für die Verschweißung bestimmt
- 5: Montageöffnung im Grundkörper **1**
- 6: Fixierungskonsole des Grundkörpers **1**
- 7: Öffnung als Belüftungskanal des Systems im eingesetzten Element **2**
- 8: Umfangsinnenflansch aus der Ansichtsseite des eingesetzten Element **2**
- 9: Träger der Fixierfeder
- 10: Öffnung im Flansch **8** des eingesetzten Elements **2** für den Einsatz der Montageelemente **4**

## Patentansprüche

1. Großflächiger Deckel des Rads eines Fahrzeugs mit eingesetzten Elementen (2), wobei der Deckel gebildet wird aus dem Grundkörper (1), der im Allgemeinen Zentrierungs- und Fixierungselemente einschließlich Emblem umfasst und mit diesem Grundkörper fest verbundene Einsatzelemente (2) anderer Farbe, abweichender Materialien oder Fertigungstechnologien, **dadurch gekennzeichnet, dass** die Einsatzelemente (2) eine Rahmenform besitzen, welche eine eigentliche Öffnung (7) als Belüftungskanal umgibt, der als Kanal eines radial-axialen Ventilators geformt ist, wobei die Einsatzelemente (2) am Umfang mit einem gelöcherten Flansch (8) mit Öffnungen (10) versehen sind und an einer Fläche eines Umfangsflansches (3) rings um die Montageöffnungen (5) an der Innenseite des Grundkörpers (1) anliegen und wobei der Grundkörper (1) mit Montageelementen (4), welche im montierten Zustand durch die Öffnungen (10) des gelöcherten Flansches (8) des Einsatzelements (2) gehen versehen ist und wobei die herausragenden Enden der Montageelemente (4) mittels Verschweißung gesichert sind.

2. Großflächiger Deckel nach Anspruch **1**, **dadurch gekennzeichnet, dass** die Form der Öffnung (7) des Belüftungskanals des Einsatzelements (2), als Funktionskanal des radial-axialen Ventilators ausgebildet ist, und verschieden, jedoch spiegelsymmetrisch, für die Räder an der rechten und linken Seite des Fahrzeugs ist.

## Claims

1. Wide-area cover of the wheel of a vehicle with inlaid elements (2), wherein the cover is formed from the basic body (1), which generally comprises centring and fixing elements including an emblem, and from insert elements (2) which are fixedly connected to said basic body and are of a different colour, differing materials or manufacturing technologies, **characterized in that** the insert elements (2) have a frame shape which surrounds an actual opening (7) in the form of a ventilation duct which is formed as a duct of a radial and axial ventilator, the insert elements (2) being provided on the circumference with a perforated flange (8) having openings (10) and, by way of a surface of a circumferential flange (3) around the installation openings (5), bearing against the inside of the basic body (1), and the basic body (1) being provided with installation elements (4) which, in the fitted state, pass through the openings (10) in the perforated flange (8) of the insert element (2), and the protruding ends of the installation elements (4) being secured by means of welding.

2. Wide-area cover according to Claim 1, **characterized in that** the shape of the opening (7) of the ventilation duct of the insert element (2) is designed as a functional duct of the radial and axial ventilator and is different, but mirror-symmetrical, for the wheels on the right and left side of the vehicle.

## Revendications

1. Couvercle à grande surface pour la roue d'un véhicule, avec des éléments insérés (2), le couvercle étant formé du corps de base (1) qui comprend en général des éléments de centrage et de fixation incluant un emblème et des éléments d'insertion (2) connectés fixement à ce corps de base, d'une autre couleur, de matériaux différents ou de techniques de fabrication différentes, **caractérisé en ce que** les éléments d'insertion (2) possèdent une forme de cadre, qui entoure une ouverture effective (7) servant de canal de ventilation, qui est formé en tant que canal d'un ventilateur radial-axial, les éléments d'insertion (2) étant dotés sur la périphérie d'une bride perforée (8) avec des ouvertures (10), et s'appliquant sur une surface d'une bride périphérique (3) tout autour des ouvertures de montage (5) sur le côté intérieur du corps de base (1), le corps de base (1) étant doté d'éléments de montage (4) qui, dans l'état monté, passent à travers les ouvertures (10) de la bride perforée (8) de l'élément d'insertion (2), et les extrémités saillantes des éléments de montage (4) étant fixées par soudage.

2. Couvercle à grande surface selon la revendication 1, **caractérisé en ce que** la forme de l'ouverture (7) du canal de ventilation de l'élément d'insertion (2) est réalisée sous forme de canal fonctionnel du ventilateur radial-axial, et est différente, mais avec une symétrie spéculaire, pour les roues du côté droit et du côté gauche du véhicule.
